(19) Europäisches Patentamt
European Patent Office
Office européen des brevets

(11) **EP 1 793 475 B1**

(12) **EUROPÄISCHE PATENTSCHRIFT**

(45) Veröffentlichungstag und Bekanntmachung des Hinweises auf die Patenterteilung:
**09.06.2010 Patentblatt 2010/23**

(51) Int Cl.:
***H02K 5/22*** *(2006.01)*

(21) Anmeldenummer: **06023287.3**

(22) Anmeldetag: **09.11.2006**

(54) **Positioniergerät**

Positioning device

Appareil de positionnement

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.12.2005 DE 102005057865**

(43) Veröffentlichungstag der Anmeldung:
**06.06.2007 Patentblatt 2007/23**

(73) Patentinhaber: **Dr. Johannes Heidenhain GmbH 83301 Traunreut (DE)**

(72) Erfinder:
• **Höfer, Volker**
**83301 Traunreut (DE)**
• **Scheglmann, Gerhard**
**83324 Ruhpolding (DE)**

(56) Entgegenhaltungen:
**EP-A1- 0 031 876     EP-A2- 0 384 495**
**DE-A1- 10 046 552     JP-A- 58 190 219**

EP 1 793 475 B1

**Beschreibung**

Die Erfindung betrifft ein Positioniergerät gemäß dem Oberbegriff des Anspruchs 1, welches insbesondere zur präzisen Bewegung eines Schwenkarmes für einen Servo-Track-Writer geeignet ist.

Derartige Positioniergeräte werden, wie oben erwähnt, häufig in Servo-Track-Writern (STW) eingesetzt, wo die Spuren oder Tracks für magnetisierbare Festplatten eingerichtet, beziehungsweise geschrieben werden. Dabei wird im STW durch ein Positioniergerät eine Welle geschwenkt, an der ein Schwenkarm befestigt ist. An dessen Ende ist ein Schreibkopf vorgesehen, der letztlich durch die Schwenkbewegung der Welle bewegt und hochpräzise positioniert wird, so dass möglichst viele Spuren pro Flächeneinheit der Festplatte konfiguriert werden können. Die Anzahl der Spuren, die pro Flächen- beziehungsweise Durchmessereinheit (Tracks per Inch) eingerichtet sind, ist ein Maß für die Speicherkapazität von Festplatten. Aus diesem Grund werden permanent Anstrengungen unternommen, eine möglichst enge Spureneinteilung zu erreichen. Damit eine Konfiguration von Festplatten mit enger Spureneinteilung beim Festplattenhersteller wirtschaftlich vorgenommen werden kann, muss eine exakte Positionierung des Schwenkarmes des STW in sehr kurzer Zeit möglich sein (Seek and Settle Time).

In der Offenlegungsschrift DE 10 2004 030 500 der Anmelderin ist ein Positioniergerät gezeigt, welches einen Schwenkmotor in Form eines so genannten Voice Coil Motors aufweist, dessen Primärteil als Rotor ausgebildet ist, welcher gegenüber ortsfesten Permanentmagneten schwenkbar angeordnet ist. Um den Schwenkmotor zu betreiben, muss der Rotor mit elektrischem Strom versorgt werden. Zu diesem Zweck ist üblicherweise ein Kabel zur elektrischen Verbindung des Rotors mit einem stationären Gerät vorgesehen. Es hat sich nunmehr gezeigt, dass ein derartiges Kabel das Betriebsverhalten, insbesondere die exakte Positionierung des Schwenkarmes des STW in sehr kurzer Zeit, stören kann.

Das Dokument EP 0384495 offenbart ein Positioniergerät mit einer Positionsmesseinrichtung.

Der Erfindung liegt die Aufgabe zugrunde, ein Positioniergerät zu schaffen, welches gegenüber vorbekannten Geräten eine Verbesserung der Positioniergenauigkeit, sowie eine Verkürzung der Seek and Settle Zeiten ermöglicht, insbesondere auch dann, wenn die Welle des Positioniergeräts eine radial nach außen gerichtete Kabelanbindung aufweist.

Diese Aufgabe wird erfindungsgemäß durch die Schaffung eines Positioniergerätes mit den Merkmalen des Patentanspruchs 1 gelöst.

Demnach umfasst das Positioniergerät ein Gehäuse und eine relativ zu diesem um eine Mittenposition schwenkbare Welle, an deren einem Ende ein zu positionierendes Element anbringbar ist. Ferner weist das Positioniergerät einen Schwenkantrieb - bestehend aus einem Stator und einem Rotor - auf, wobei der Rotor zum Stator relativ bewegbar ist. Zur Messung des Schwenkwinkels der Welle umfasst das Positioniergerät weiterhin eine Positionsmesseinrichtung, bestehend aus zwei relativ zueinander bewegbaren Teilen. Dabei sind der Rotor des Schwenkantriebes und ein erstes Teil der Positionsmesseinrichtung mit der Welle drehfest verbunden. Ein Kabel zur elektrischen Verbindung der Welle, des Rotors oder des ersten Teils der Positionsmesseinrichtung mit einem stationären Gerät ist überdies Bestandteil des Positioniergeräts. Ausgehend von der in der Mittenposition befindlichen Welle weist das Kabel zumindest in einem Teilabschnitt einen spiralförmigen, radial nach außen führenden Verlauf auf.

Das erfindungsgemäße Positioniergerät hat den Vorteil, dass es eine technisch einfache und wirtschaftlich günstige Bauweise und eine überaus genaue und schnelle Positionierung ermöglicht, auch dann, wenn die Welle des Positioniergeräts eine radial nach außen gerichtete Kabelanbindung aufweist. Dies ist beispielsweise der Fall, wenn eine elektrische Kupplung, etwa eine Buchse, des STWs seitlich am Gehäuse vorgesehen werden muss. Durch die Erfindung wird insbesondere auch das Regelverhalten des Positioniergerätes verbessert, so dass dadurch die Positionierung optimiert wird. Es wurde nämlich herausgefunden, dass Kräfte, welche durch die Verformung bzw. Biegung des Kabels entstehen, schädlich für das Leistungsverhalten des Positioniergerätes sein können.

Überraschenderweise stellte sich heraus, dass das Gesamtverhalten des Positioniergerätes bezüglich Positioniergenauigkeit und Seek and Settle Time in außerordentlichem Maße verbessert wird, wenn die Bauweise des Positioniergerätes gemäß der erfindungemäßen Lehre verändert wird.

Das Kabel dient, wie bereits erwähnt, zur elektrischen Verbindung der Welle, des Rotors oder des ersten Teils der Positionsmesseinrichtung mit einem stationären Gerät. Das stationäre Gerät kann beispielsweise eine Steuer- oder Reglereinrichtung sein, welche einen geregelten Strom ausgibt, und /oder einen Anschluss für das Erdpotenzial aufweist. Beispielsweise kann die elektrische Verbindung der Welle die Erdung der Welle sicherstellen. Alternativ oder ergänzend kann der Rotor zur Stromversorgung mit einem stationären Gerät elektrisch verbunden sein. Sofern das schwenkbare erste Teil der Positionsmesseinrichtung einer elektrischen Anbindung bedarf, kann dieses mit einem stationären Gerät über das Kabel verbunden sein. Dies ist beispielsweise dann der Fall, wenn das schwenkbare erste Teil der Positionsmesseinrichtung aktiv ausgestaltet ist und beispielsweise eine Lichtquelle aufweist. In diesem Fall würde beispielsweise die Lichtquelle der Positionsmesseinrichtung mit Strom aus einer stationären Stromquelle versorgt, so dass dann das stationäre Gerät als eine ortsfeste Stromquelle zu verstehen wäre.

Das Kabel dient also zur elektrischen Verbindung der Welle (z.B. Erdung) und / oder des Rotors und / oder des ersten Teils der Positionsmesseinrichtung mit einem stationären Gerät.

Unter dem Begriff Mittenposition ist eine Winkellage der Welle zu verstehen, von der aus die Welle in beide Drehrichtungen geschwenkt werden kann, also sowohl in Richtung des Uhrzeigersinns als auch entgegen dem Uhrzeigersinn gedreht werden kann. Die Mittenposition umfasst folglich nicht Winkellagen der Welle am Rand des Schwenkbereichs. Ein Spezialfall der Mittenposition ist gegeben, wenn sich die Welle genau in ihrer Nulllage befindet, so dass sich die Welle von dieser Winkellage aus um den gleichen Winkelbetrag in Richtung des Uhrzeigersinns als auch entgegen dem Uhrzeigersinn bis zum maximalen Schwenkwinkel, der meist durch einen mechanischen Anschlag begrenzt ist, drehen lässt.

Mit Vorteil ist der Verlauf des Kabels derart ausgestaltet, dass das Kabel in einem Winkel von mindestens 180°, insbesondere von mindestens 240°, bevorzugt von mindestens 360° um die Welle herum zu liegen kommt. Mit anderen Worten ausgedrückt, läuft das Kabel mindestens entlang eines halben Umlaufs bzw. entlang einer halben Windung spiralförmig um die Welle herum.

In bevorzugter Ausgestaltung ist der Verlauf des Kabels derart ausgestaltet ist, dass dieser, wenn sich die Welle in einer Mittenposition, insbesondere in der Nulllage befindet, folgender Beziehung genügt:

$$r(\Theta) = Ra \cdot \sqrt{1 - \left(1 - \frac{Ri^2}{Ra^2}\right) \cdot \left(1 - \frac{\Theta}{\Theta_{max}}\right)^2}$$

Dabei ist $\Theta$ die Polarkoordinatenrichtung eines Radialstrahls, ausgehend vom Pol der Spirale, Ra der Radius bei $\Theta_{max}$ und Ri der Innenradius der Spirale bei $\Theta = 0$.

In weiterer Ausgestaltung ist die Welle um einen Schwenkwinkel von mindestens $\pm$ 25°, insbesondere um mindestens $\pm$ 45° um die Mittenposition herum frei schwenkbar. Das heißt, dass die Mittenposition einen bestimmten Winkelabstand vom maximalen Schwenkwinkel, z.B. vom mechanischen Anschlag, aufweist.

Das Gehäuse des Positioniergeräts kann Mantelseiten und Stirnseiten aufweisen, wobei die Stirnseiten des Gehäuses die räumliche Begrenzung des Positioniergeräts in axialer Richtung, bezogen auf die Welle darstellen. Die Mantelseiten - im Falle einer zylindrischen Ausgestaltung des Gehäuses liegt nur eine Mantelseite vor - begrenzen das Positioniergerät entsprechend in radialer Richtung. Gemäß einer Weiterbildung der Erfindung ist an einer Mantelseite des Gehäuses eine elektrische Kupplung angeordnet, zur elektrischen Verbindung des Kabels mit dem stationären Gerät.

Häufig wird dasjenige Ende der Welle, welches dem Ende an dem das zu positionierende Element anbringbar ist gegenüber liegt, mit einer weiteren Funktionalität versehen. Dies kann zum Beispiel sein, dass das betreffende Ende der Welle mit einem mechanischen Anschlag zusammen wirkt. Diese Randbedingung macht einen axialen Kabelabgang aus der Welle unmöglich, so dass das Kabel notwendigerweise einen radial nach außen führenden Verlauf aufweist.

Die erfindungsgemäße Konstruktion ist besonders für Positioniergeräte, die mit hochempfindlichen Positionsmesseinrichtungen ausgestattet sind von Vorteil. Derartige Positionsmesseinrichtungen können mit einer fotoelektrischen Abtastung, insbesondere nach einem interferentiellen Messprinzip, arbeiten.

Weitere Vorteile der Erfindung werden bei der nachfolgenden Beschreibung eines Ausführungsbeispiels anhand von Figuren deutlich werden.

Es zeigen die

Figur 1    eine Schnittdarstellung durch das erfindungsgemäße Positioniergerät,

Figur 2    eine Ansicht des Positioniergeräts von unten bei geöffnetem Gehäusedeckel.

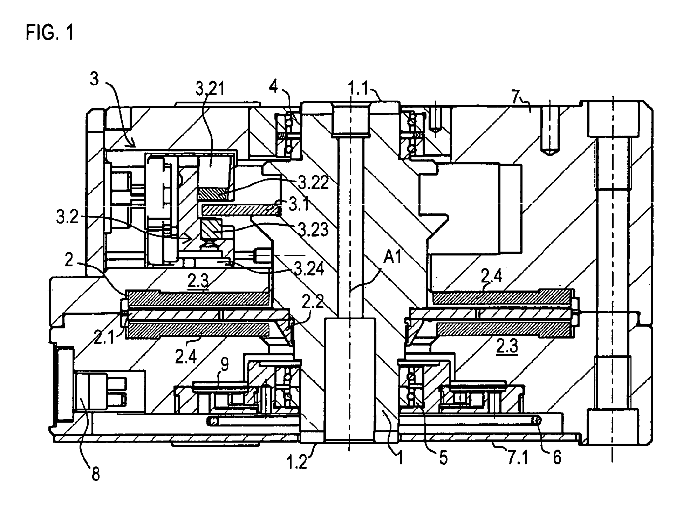

In der Figur 1 ist ein Positioniergerät dargestellt, wie es im Zusammenhang mit STWs eingesetzt wird. Eine Welle 1 ist demnach um eine Achse A1 schwenkbar und weist ein Wellenende 1.1 auf, an dem ein, in der Figur 1 nicht dargestellter Schwenkarm zum Beschreiben einer Festplatte befestigt werden kann. Das Gehäuse 7 ist im gezeigten Ausführungsbeispiel als ein im Wesentlichen zylindrischer Körper ausgestaltet. Demnach weist das Gehäuse 7 eine Mantelseite auf, die das Positioniergerät räumlich radial begrenzt. Darüber hinaus begrenzen zwei Stirnseiten des Gehäuses das Positioniergerät in seiner axialen Ausdehnung. An der unteren Stirnseite ist ein abnehmbarer Gehäusedeckel 7.1 angeordnet. Eine elektrische Kupplung 8, hier eine Buchse zur Aufnahme eines Steckers, ist dagegen an der Mantelseite des Gehäuses 7 angeordnet.

An der Welle 1 befinden sich innerhalb des Gehäuses 7 zwei Wälzlagereinheiten 4, 5, welche im gezeigten Ausführungsbeispiel jeweils zwei Kugellager 4.1, 4.2, 5.1, 5.2 umfassen. Die Wälzlagereinheit 5 ist so montiert, dass diese als Festlager dient, also als eine axial starre Lagerstelle ausgestaltet ist. Die Wälzlagereinheit 4 ist durch eine axial bewegliche Ringmembran 9 gleichsam als Loslager ausgestaltet, wobei die Ringmembran 9 überaus drehsteif in Torsions- bzw. Umfangsrichtung ist.

Die Schwenkbewegung, im gezeigten Ausführungsbeispiel ist ein Schwenkbereich von ± 60° um die Nulllage der Welle 1 möglich, wird durch einen so genannten Voice Coil Motor 2, einem elektrischen Direktantrieb, eingeleitet. Das Primärteil des Voice Coil Motors 2, welches im gezeigten Beispiel als Rotor innerhalb des Schwenkbereiches arbeitet, besteht aus einer Leiterplatte 2.1, die als Windungen entsprechend verlaufende Leiterbahnen umfasst. Die Windungen 1 sind dabei so ausgeführt, dass sie parallel zur Zeichenebene in der Figur 1 zu liegen kommen. Das Sekundärteil, hier gleichzeitig der Stator, des Voice Coil Motors 2 wird von Permanentmagneten 2.4 gebildet, die dem Rotor durch einen Luftspalt getrennt gegenüber liegen.

Im Betrieb des Voice Coil Motors 2 bleiben die Permanentmagnete 2.4 ortsfest, während die Leiterplatte 2.1 eine Schwenkbewegung entlang einer Teilkreislinie ausführt. Die Leiterplatte 2.1 ist durch eine Klemmmutter 2.2 mit der Welle 1 drehfest verbunden. Auf diese Weise wird das Drehmoment des Voice Coil Motors 2 für die Schwenkewegung in die Welle 1 eingeleitet. Die Leiterplatte 2.1 und die Klemmmutter 2.2 können somit dem Primärteil beziehungsweise dem Rotor des Voice Coil Motors 2 zugeordnet werden.

Das Sekundärteil besteht aus Permanentmagneten 2.4, welche auf Magnetträgern 2.3 aus ferromagnetischem Werkstoff entlang der Teilkreislinie befestigt sind. Das Sekundärteil wirkt im Betrieb des Positioniergerätes wie eine Drehmomentstütze und nimmt nicht an der Schwenkbewegung der Welle 1 teil und kann daher im gezeigten Ausführungsbeispiel auch als Stator bezeichnet werden. Der Voice Coil Motor 2 arbeitet demnach nach dem Prinzip eines synchronen Direktantriebs.

Der tatsächliche Schwenkwinkel der Welle 1 wird von einer Positionsmesseinrichtung 3 gemessen, die nach einem ähnlichen Wirkprinzip arbeitet, wie es in der Offenlegungsschrift EP 0 978 708 A1 der Anmelderin beschrieben ist. Die Positionsmesseinrichtung 3 besteht demzufolge aus einem transparenten Phasengitter 3.1, welches die Form eines Segments einer Ringscheibe hat, so dass der gesamte Schwenkbereich abgetastet werden kann. Das transparente Phasengitter 3.1 ist dabei verdrehfest mit der Welle 1 verbunden, so dass dieses an den Schwenkbewegungen der Welle 1 teilnimmt.

Dem gegenüber liegt die nicht drehbare Abtasteinheit 3.2 der Positionsmesseinrichtung 3. Die Abtasteinheit 3.2 besteht aus einer Lichtquelle 3.21, welche beispielsweise als LED ausgestaltet ist, einer Kondensorlinse 3.22 und einem Maßstabssegment 3.23, sowie Fotodetektoren 3.24 zum Empfangen der modulierten Lichtstrahlen. Das Maßstabssegment 3.23 weist an beiden Seiten (in der Figur 1 die obere und die untere Seite) Strukturen auf, die als Phasengitter wirken. Dadurch, dass das Maßstabssegment 3.23 nicht an der Schwenkbewegung teilnimmt und so stets der Lichtquelle 3.21 gegenüber liegt, kann dieses, verglichen mit dem schwenkbaren Phasengitter 3.1, klein ausgeführt werden.

Das von der als LED ausgestalteten Lichtquelle 3.21 erzeugte Licht tritt im Betrieb des Positioniergerätes zunächst durch die Kondensorlinse 3.22 und danach durch das transparente Phasengitter 3.1, welches gebeugte Strahlenanteile erzeugt und eine Phasenänderung der Lichtwellen verursacht. Die derart veränderten Lichtstrahlen gelangen sodann auf die erste Oberfläche des Maßstabssegments 3.23, die als Phasengitter ausgebildet ist. Dort werden sie erneut gebeugt und es tritt eine weitere Phasenänderung der Lichtwellen auf. Die gebeugten Lichtstrahlen treten dann durch die zweite Oberfläche, die als weiteres Phasengitter dient. Die derart modulierten Strahlenbündel treffen dann auf die Fotodetektoren 3.24. Die Fotodetektoren 3.24 wandeln die Lichtsignale in elektrische Signale um, welche danach zur Gewinnung der Lageinformationen entsprechend weiterverarbeitet werden. Die Verwendung des vergleichsweise kleinen Maßstabssegments 3.23 als nicht rotierendes Bauteil hat insbesondere den Vorteil, dass die Toleranzen bezüglich des Planschlages des Maßstabssegments 3.23 nicht übermäßig eng gewählt werden müssen.

In einer alternativen Ausgestaltung der Positionsmesseinrichtung 3 umfasst die Abtasteinheit 3.2 ein sog. VCSEL (Vertical Cavity Surface Emitting Laser) als Lichtquelle 3.21. Von dieser Lichtquelle 3.21 wird ein Strahlenbündel emittiert, das sich entlang der Richtung einer optischen Achse ausbreitet. Im Wesentlichen handelt es sich beim emittierten Strahlenbündel vorzugsweise um eine TEM 00 Mode eines Gaußschen Strahles, der vom verwendeten VCSEL emittiert wird. Das emittierte Strahlenbündel weist aufgrund der VCSEL-Abstrahlcharakteristik eine bestimmte Divergenz auf und wird mittels der Kondensorlinse 3.22 umgeformt. Die Strahlumformung des emittierten, divergenten Strahlenbündels erfolgt vorzugsweise dergestalt, dass nach der Kondensorlinse 3.22 ein annähernd kollimiertes Strahlenbündel vorliegt, das in einem bestimmten Abstand von der Kondensorlinse 3.22 eine Strahltaille besitzt. Als Strahltaille sei in diesem Zusammenhang diejenige Stelle im Strahlquerschnitt entlang der Strahlausbreitungsrichtung verstanden, an der das Strahlenbündel seine minimale Fläche bzw. Querausdehnung aufweist. Im Bereich der Strahltaille ist das Phasengitter 3.1 angeordnet, auf welches das umgeformte Strahlenbündel auftrifft. Die Anordnung des Phasengitters 3.1 an dieser Stelle hat den Vorteil, dass dadurch die Anbautoleranz, sowohl in radialer bzw. tangentialer Richtung, wie auch in Richtung der Strahlausbreitung, also in axialer Richtung, vergrößert wird. Grundsätzlich ist für eine hohe Anbautoleranz in dieser Richtung eine Beleuchtung des Phasengitters 3.1 mit einem Strahlenbündel geringer Divergenz und einem kleinem Strahldurchmesser anzustreben. Da sich diese Größen bei einer vorgegebenen Wellenlänge nicht beliebig minimieren lassen, ist ein Kompromiss für die optimale Anordnung des Phasengitters 3.1 zu finden. Ein derartiger Kompromiss ergibt sich durch die Anordnung des Phasengitters 3.1 in der Strahltaille des emittierten bzw. umgeformten Strahlenbündels, wo das Produkt aus Divergenz und Strahldurchmesser der TEM 00 Mode eines Gaußschen Strahles ein Minimum aufweist. Das Phasengitter 3.1 bewirkt eine Aufspaltung des einfallenden Strahlenbündels in erste und zweite Teilstrahlenbündel, die sich von der optischen Achse weg ausbreiten. Die so veränderten Strahlenbündel treffen, wie im Zusammenhang mit der ersten Alternative der Positionsmesseinrichtung 3 bereits beschrieben, auch hier auf die Fotodetektoren 3.24. Durch die Fotodetektoren 3.24 werden die Lichtsignale in positionsabhängige elektrische Signale umgewandelt.

Gerade bei der Verwendung einer derartig hochauflösenden interferentiellen Positionsmesseinrichtung 3 ist eine Optimierung der mechanisch wirkenden Bauteile von besonderem Vorteil, um eine möglichst hohe Steigerung der Genauigkeit und der Schnelligkeit des Positioniergerätes in seiner Gesamtheit zu erreichen.

Gemäß der Figur 1 befindet sich in einer Ausnehmung des Gehäuses 7 ein Kabel 6, wobei die Ausnehmung durch den Gehäusedeckel 7.1 geschlossen ist. Das Kabel 6 dient zur elektrischen Verbindung der Welle 1 und des Rotors 2.1 mit einem stationären Gerät über die elektrische Kupplung 8.

Im vorgestellten Ausführungsbeispiel ist das stationäre Gerät eine Reglereinrichtung, deren Ausgangskabel in die elektrische Kupplung 8 eingesteckt werden kann, die mit dem Kabel 6 elektrisch verbunden ist. Über das Kabel 6 wird dann der geregelte Strom zur Bewegung des Voice Coil Motors 2 in die Windungen der Leiterplatte 2.1 eingeleitet. Zu diesem Zweck werden zwei Litzen, welche Bestandteil des Kabels 6 sind benötigt. Eine weitere Litze dient zur Erdung der Welle 1. Auch diese Litze ist mit der elektrischen Kupplung 8 kontaktiert. Nach erfolgtem Anschluss an das stationäre Gerät, hier die Reglereinrichtung, liegt an der Welle 1 dann Erdpotenzial an. Entsprechend besteht das Kabel 6 aus drei Litzen, welche wiederum jeweils 128 Adern - hier mit einem Durchmesser von jeweils $50\mu$m - aufweisen. Durch diese Bauweise ist im Ergebnis ein überaus elastisches Kabel 6 erreichbar, welches überdies für eine hohe Anzahl von Biegevorgängen geeignet ist.

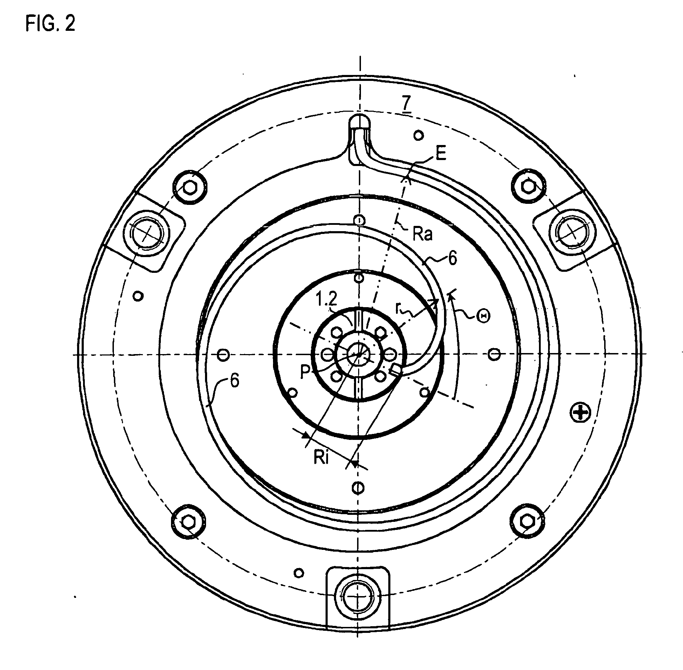

In der Figur 2 ist eine Ansicht des Positioniergerätes von unten mit entferntem Gehäusedeckel 7.1 dargestellt. Die Welle 1 befindet sich in dieser Zeichnung in einer Mittenposition, im dargestellten Ausführungsbeispiel befindet sich die Welle 1 insbesondere in ihrer Nulllage und kann also ausgehend von dieser Position um den gleichen Winkelbetrag (hier jeweils 60°) im Uhrzeigersinn und entgegen dem Uhrzeigersinn geschwenkt werden. Das Kabel 6 ist an der Welle 1 in einem vorgegebenen Austrittswinkel befestig und weist ausgehend von der Welle 1 einen spiralförmigen, radial nach außen führenden Verlauf auf. Das Kabel 6 ist weiterhin in einem vorbestimmten Winkel an einem Endpunkt E am Gehäuse 7 befestigt, hier verklebt. Zwischen dem Austritt aus der Welle 1 und dem Endpunkt E kann sich das Kabel 6 relativ zum Gehäuse 7 bewegen. Geometrisch betrachtet bildet das Kabel 6 eine Spirale um einen Pol P, bedingt durch die Gestaltung des Anfangs- und Endpunkts E, sowie der dazugehörigen Winkelausrichtungen des Kabels 6 an diesen Punkten. Der Verlauf dieser Spirale kann in einem Polarkoordinatensystem, bei dem der Koordinatenursprung im Pol P der Spirale liegt, und die jeweilige Polarkoordinatenrichtung durch $\Theta$ festgelegt ist, einfach beschrieben werden. Demnach ist $\Theta$ der Winkel eines im Koordinatenursprung (hier der Pol P) beginnender Radialstrahls relativ zur Ausgangs-Polarkoordinatenrichtung ($\Theta = 0$). Die Spirallinie, welche den Verlauf des Kabels 6 widerspiegelt, beginnt bei $\Theta = 0$ und $r(\Theta=0) = Ri$, wobei Ri dem halben Durchmesser der Welle 1 an der betreffenden Stelle entspricht. Im gezeigten Ausführungsbeispiel läuft die Polarkoordinatenrichtung bis zu einem Winkel $\Theta_{max}$ von ca. 460°, dort befindet sich der Endpunkt E und zwar in einem Abstand Ra, ausgehend vom Pol P. Mathematisch ausgedrückt genügt der Verlauf des Kabels 6 folgender Beziehung:

$$r(\Theta) = Ra \cdot \sqrt{1 - \left(1 - \frac{Ri^2}{Ra^2}\right) \cdot \left(1 - \frac{\Theta}{\Theta_{max}}\right)^2}$$

Zur Reduzierung der Reibungskräfte und zur Minimierung von Abriebserscheinungen kann die Fläche des Gehäuses 7 sowie die Fläche des Gehäusedeckels 7.1, welche mit dem Kabel 6 in Berührung kommen, mit einem entsprechend geeigneten Material, wie zum Beispiel PTFE (Polytetrafluorethylen) ausgekleidet oder beschichtet werden. Die Verwendung von PTFE an dieser Stelle hat auch den Vorteil, dass das Regelverhalten des STW beim Anfahren, also bei stehender Welle 1, besonders gut ist, weil PTFE die Eigenschaft aufweist, dass die Haftreibung genauso groß wie die Gleitreibung ist, so dass der Übergang vom Stillstand zur Bewegung ohne Rucken stattfindet.

Alternativ oder ergänzend kann das Kabel 6 zumindest in einem Oberflächenbereich, welcher in Kontakt mit dem Gehäuse 7 bzw. dem dazu gehörigen Gehäusedeckel 7.1 treten kann, reibungs- und abriebsarmes Material aufweisen. Beispielsweise kann das Kabel 6 durch geeignete Ringe, z. B. PTFE-Ringe, in bestimmten Abständen umschlossen werden, so dass sich die reibungs- und abriebsarmen Flächen der Ringe das Gehäuses 7 und den Gehäusedeckel 7.1 berühren.

Dadurch, dass das Kabel 6, ausgehend von der in einer Mittenposition befindlichen Welle 1, einen spiralförmigen, radial nach außen führenden Verlauf aufweist, wird das Betriebsverhalten des Positioniergerätes durch eingeleitete Kräfte des Kabels 6 nicht merklich beeinflusst, weil diese Kräfte signifikant reduziert sind. Ebenso wenig stören durch den nunmehr optimierten Verlauf des Kabels 6 Federkräfte des Kabels die Leistungsfähigkeit des Positioniergerätes bzw. dessen Regelverhalten.

Zur weiteren Optimierung kann das Kabel 6 in mehrere Einzelkabel aufgeteilt werden, die dann in einer, ggf. geradzahligen, Anzahl von gegenläufigen oder zueinander gespiegelten Spiralen verlaufen. Auf diese Weise würden sich Federkräfte der Einzelkabel zumindest zum Großteil gegenseitig aufheben, so dass Störkräfte auf ein Minimum reduziert sind.

**Patentansprüche**

1. Positioniergerät umfassend

   · ein Gehäuse (7, 7.1),
   · eine relativ zum Gehäuse (7, 7.1) um eine Mittenposition schwenkbare Welle (1) an deren einem Ende (1.1) ein zu positionierendes Element anbringbar ist,
   · einen Schwenkantrieb (2), bestehend aus einem Stator (2.3, 2.4) und einem Rotor (2.1), wobei der Rotor (2.1) zum Stator (2.3, 2.4) relativ bewegbar ist,
   · eine Positionsmesseinrichtung (3), bestehend aus zwei relativ zueinander bewegbaren Teilen (3.1, 3.2), wobei

   der Rotor (2.1) des Schwenkantriebes (2) und ein erstes Teil (3.1) der Positionsmesseinrichtung (3) mit der Welle (1) drehfest verbunden sind, und das Positioniergerät weiterhin ein Kabel (6) zur elektrischen Verbindung der Welle (1) oder des Rotors (2.1) oder des ersten Teils (3.1) mit einem stationären Gerät umfasst, wobei das Kabel (6), ausgehend von der in der Mittenposition befindlichen Welle (1), einen spiralförmigen, radial nach außen führenden Verlauf aufweist, wobei sich das Kabel (6) innerhalb des Gehäuses (7, 7.1) befindet **dadurch gekennzeichnet, dass** Flächen des Gehäuses (7, 7.1), welche in Kontakt mit dem Kabel (6) sind mit reibungs- und abriebsarmen Material ausgekleidet oder beschichtet sind und alternativ oder ergänzend zumindest ein Oberflächenbereich des Kabels (6), welcher in Kontakt mit dem Gehäuse (7; 7.1) ist, reibungs- und abriebsarmes Material aufweist.

2. Positioniergerät gemäß dem Anspruch 1, **dadurch gekennzeichnet, dass** der Verlauf des Kabels (6) derart ausgestaltet ist, dass das Kabel (6) in einem Winkel von mindestens 180°, insbesondere mindestens 240°, um die Welle (1) herum zu liegen kommt.

3. Positioniergerät gemäß dem Anspruch 1 oder 2, **dadurch gekennzeichnet, dass** der Verlauf des Kabels (6) derart ausgestaltet ist, dass dieser der Beziehung

$$r(\Theta) = Ra \cdot \sqrt{1 - \left(1 - \frac{Ri^2}{Ra^2}\right) \cdot \left(1 - \frac{\Theta}{\Theta_{max}}\right)^2}$$

genügt, wobei $\Theta$ die Polarkoordinatenrichtung eines Radialstrahls ausgehend vom Pol (P) der Spirale ist, Ra der Radius bei $\Theta_{max}$ und Ri der Innenradius der Spirale ist.

4. Positioniergerät gemäß einem der vorhergehenden Ansprüche, **dadurch gekennzeichnet, dass** die Welle (1) um einen Schwenkwinkel ($\alpha$) von mindestens $\pm$ 25°, insbesondere um mindestens $\pm$ 45° um die Mittenposition herum schwenkbar ist.

5. Positioniergerät gemäß einem der vorhergehenden Ansprüche, **dadurch gekennzeichnet, dass** an einer Mantelseite des Gehäuses (7, 7.1) eine elektrische Kupplung (8) angeordnet ist.

6. Positioniergerät gemäß einem der vorhergehenden Ansprüche, **dadurch gekennzeichnet, dass** die schwenkbare Welle (1) ein weiteres Ende (1.2) aufweist, welches dem Ende (1.1) an dem ein zu positionierendes Element anbringbar ist gegenüber liegt, und dieses weitere Ende (1.2) das Gehäuse (7,) durchdringt.

7.  Positioniergerät gemäß einem der vorhergehenden Anspruche, **dadurch gekennzeichnet, dass** das Material ein Kunststoff ist, insbesondere PTFE.

**Claims**

1.  A positioning device comprising

    - a housing (7, 7.1),
    - a shaft (1), which can be pivoted relative to the housing (7, 7.1) about a center position, to the one end (1.1) of which an element, which is to be positioned, can be attached,
    - a pivot drive (2), consisting of a stator (2.3, 2.4) and a rotor (2.1), wherein the rotor (2.1) can be moved relative to the stator (2.3, 2.4),
    - a position measuring device (3) consisting of two parts (3.1, 3.2), which can be moved relative to one another, wherein

    the rotor (2.1) of the pivot drive (2) and a first part (3.1) of the position measuring device (3) are connected to the shaft (1) in a rotatably fixed manner, and the positioning device further comprises a cable (6) for electrically connecting the shaft (1) or the rotor (2.1) or the first part (3.1) to a stationary device, wherein the cable (6), starting from the shaft (1) located in the center position, encompasses a spiral-shaped course leading radially outwards, wherein the cable (6) is located within the housing (7, 7.1), **characterized in that** surfaces of the housing (7, 7.1), which are in contact with the cable (6) are lined or coated with low-friction and low-abrasion materials and, in the alternative or in addition, at least one surface area of the cable (6), which is in contact with the housing (7; 7.1) encompasses low-friction and low-abrasion material.

2.  The positioning device according to claim 1, **characterized in that** the course of the cable (6) is embodied in such a manner that the cable (6) comes to rest around the shaft (1) at an angle of at least 180°, in particular of at least 240°.

3.  The positioning device according to claim 1 or 2, **characterized in that** the course of the cable (6) is embodied in such a manner that it satisfies the relationship

$$r(\Theta) = Ra \cdot \sqrt{1 - \left(1 - \frac{Ri^2}{Ra^2}\right) \cdot \left(1 - \frac{\Theta}{\Theta_{max}}\right)^2}$$

wherein ($\Theta$) is the polar coordinate direction of a radial line based on the pole (P) of the spiral, Ra is the radius at $(\Theta)_{max}$ and Ri is the inside radius of the spiral.

4.  The positioning device according to one of the preceding claims, **characterized in that** the shaft (1) can be pivoted about the center position about a pivot angle ($\alpha$) of at least $\pm$ 25°, in particular of about at least $\pm$ 45.

5.  The positioning device according to one of the preceding claims, **characterized in that** an electric coupling (8) is arranged on the lateral face of the housing (7, 7.1).

6.  The positioning device according to one of the preceding claims, **characterized in that** the pivotable shaft (1) encompasses a further end (1.2), which is located opposite to the end (1.1), to which an element, which is to be positioned, can be attached, and **in that** this further end (1.2) penetrates the housing (7).

7.  The positioning device according to one of the preceding claims, **characterized in that** the material is a plastic, in particular PTFE.

**Revendications**

1. Appareil de positionnement, comprenant

   - un boîtier (7, 7.1),
   - un arbre (1) pouvant pivoter autour d'une position du milieu par rapport au boîtier (7, 7.1), à l'une extrémité (1.1) duquel un élément à positionner peut être fixé,
   - un entraînement pivotant (2), constitué d'un stator (2.3, 2.4) et d'un rotor (2.1), dans lequel le rotor (2.1) peut être déplacé par rapport au stator (2.3, 2.4),
   - un dispositif de mesure de position (3), constitué de deux pièces (3.1, 3.2) déplaçables l'une par rapport à l'autre, dans lequel

   le rotor (2.1) de l'entraînement pivotant (2) et une première pièce (3.1) du dispositif de mesure de position (3) sont reliés solidaires en rotation avec l'arbre (1), et l'appareil de positionnement comprend en outre un câble (6) pour le raccordement électrique de l'arbre (1) ou du rotor (2.1) ou de la première pièce (3.1) avec un appareil stationnaire, le câble (6) présentant un parcours s'étendant radialement vers l'extérieur, en forme de spirale, à partir de l'arbre (1) se trouvant dans la position du milieu, dans lequel le câble (6) se trouve à l'intérieur du boîtier (7, 7.1), **caractérisé en ce que** des surfaces du boîtier (7, 7.1), qui sont en contact avec le câble (6) et revêtues ou recouvertes d'un matériau à faible frottement et à faible abrasion, et, de façon alternative ou complémentaire, au moins une région de surface du câble (6), se trouvant en contact avec la boîtier (7, 7.1), comporte un matériau à faible frottement et à faible abrasion.

2. Appareil de positionnement selon la revendication 1, **caractérisé en ce que** le parcours du câble (6) est conçu de telle manière, que le câble (6) s'applique autour de l'arbre (1) sous un angle d'au moins 180°, en particulier d'au moins 240°.

3. Appareil de positionnement selon l'une des revendications 1 ou 2, **caractérisé en ce que** le parcours du câble (6) est conçu de manière à répondre au rapport suivant :

$$r(\Theta) = Ra \cdot \sqrt{1 - \left(1 - \frac{Ri^2}{Ra^2}\right) \cdot \left(1 - \frac{\Theta}{\Theta_{max}}\right)^2}$$

où e est la direction de coordonnée polaire d'un rayon radial partant du pôle (P) de la spirale, Ra est le rayon pour $\theta_{max}$ et Ri le rayon interne de la spirale.

4. Appareil de positionnement selon l'une des revendications précédentes, **caractérisé en ce que** l'arbre (1) peut pivoter autour d'un angle de pivotement ($\alpha$) d'au moins $\pm$ 25°, en particulier d'au moins $\pm$ 45° autour de la position du milieu.

5. Appareil de positionnement selon l'une des revendications précédentes, **caractérisé en ce qu'**un couplage électrique (8) est prévu sur l'enveloppe du boîtier (7, 7.1).

6. Appareil de positionnement selon l'une des revendications précédentes, **caractérisé en ce que** l'arbre pivotant (1) comporte une autre extrémité (1.2) située en face de l'extrémité (1.1) à laquelle peut être fixé un élément à positionner, et **en ce que** cette autre extrémité (1.2) traverse le boîtier (7).

7. Appareil de positionnement selon l'une des revendications précédentes, **caractérisé en ce que** le matériau est une matière plastique, en particulier du PTFE.

FIG. 1

FIG. 2

**IN DER BESCHREIBUNG AUFGEFÜHRTE DOKUMENTE**

**In der Beschreibung aufgeführte Patentdokumente**

- DE 102004030500
- EP 0384495 A
- EP 0978708 A1